# EUROPEAN PATENT SPECIFICATION

(11) **EP 2 125 511 B1**
(45) Date of publication and mention of the grant of the patent: **08.09.2010**
(21) Application number: 07703066.6
(22) Date of filing: 26.01.2007
(51) Int. Cl.: B64C 21/10

(54) **SURFACE STRUCTURE**
OBERFLÄCHENSTRUKTUR
STRUCTURE DE SURFACE

(43) Date of publication of application: 02.12.2009
(73) Proprietor: Kick Off Ltd., Caribbean Suite, The Valley TV1 11P Anguilla (AI)
(72) Inventor: VAN MERKSTEIJN, Jacobus, Lambertus, CH-3920 Zermatt (CH)
(74) Representative: de Lange, Hendrik Cornelis
(86) International application number: PCT/EP2007/000682
(87) International publication number: WO 2008/089790

(56) References cited:
- WO-A-84/03867
- DE-A1- 3 609 541
- DE-A1- 10 161 732
- US-A- 6 092 766
- US-B1- 6 345 791

## Description

The invention relates to a surface structure, which reduces drag of a particle flow, like an airflow or fluid flow or fluidized sand, when such a flow is guided along a surface.

It is known to reduce the drag of a surface by providing small ribs or grooves on the surface, which generates turbulence and distorces the boundary layer of a flow, which in turn reduces the drag.

It is an object of the invention to provide a surface structure, which further reduces the drag of a surface. This object is achieved by a surface structure according to the invention, which surface structure comprises surface elements arranged in scales forming alternating rows, as disclosed in document DE 10161732, wherein in the invention the surface elements comprise grooves, which extend obliquely from the longitudinal axis of a row in a featherlike arrangement.

If the particle flow is directed in substantially the longitudinal direction of the rows, the obliquely extending grooves will provide a rotation to the particle flow resulting in the generation of turbos or vortexes. These vortexes provide a turbulent boundary layer which reduces the drag of the main particle flow being guided along the surface.

By providing the surface element in scales, each surface element generates its own vortex. As the grooves extend obliquely from the longitudinal axis of a row in a featherlike arrangement, two counter rotating vortexes per surface element are present. These dual shaped turbos or vortexes have the advantage that the friction between the vortexes is virtually zero.

Due to the arrangement of surface elements in scales the dual shaped turbos of a surface element activate a next dual shaped turbo or vortex for the next surface element in the same row.

These advantages with the surface structure according to the invention can be achieved for any particle flow, like a fluid flow, a gas flow or a true particle flow like fluidized sand. Also radiation can be considered to be a particle flow.

In a preferred embodiment of the surface structure according to the invention, the surface elements in a row extend over each other like tiles. This has the advantage that the number of surface elements on a certain area can be kept constant, while the surface area of a surface element can be increased, which contributes to the generation of turbos.

In another preferred embodiment of the surface structure according to the invention, the surface elements are leaf shaped. When a flow reaches the leaf shaped surface element at the stalk of the leaf shape, the turbo or vortex is induced and due to the sideways expansion of the surface in longitudinal direction, the size of the turbo is rapidly enlarged.

In another embodiment of the surface structure according to the invention, the stalk of the leaf shaped surface element is teardrop shaped providing a pin shape to the surface elements. The teardrop shape generates a small turbo or vortex, which is then compressed at the transition to the further leaf shape of the surface element. Due to this compression, the rotation speed of the vortexes is increased. This contributes to the reduction of the drag of the surface structure.

In a very preferred surface structure according to the invention, the curved edge of the surface element of a row interlock with the curved edge of the surface element of an adjacent row.

The invention relates further to a surface comprising a surface structure according to the invention, wherein the surfaces of an isolating layer arranged on top of an electrically conducting material. When for example air flows along the surface structure, the air will be electrically charged and due to the isolating layer of the surface structure, this charge is now removed from the air. Accordingly, the generated vortexes or turbos are electrically charged. Now by providing a static charge to the electrically conducting material underneath the isolating layer, the electrically charged turbos can be attracted or rejected and accordingly the drag of the surface structure can be controlled by controlling the charge on the electrically conducting material. This enables the control of the flow flowing along the surface structure and could for example provide an alternative for flaps on a wing of an airplane.

These and other advantages of the invention will be elucidated in conjunction with the accompanying drawings.
Figure 1 shows a top view of a first embodiment of a surface structure according to the invention.
Figure 2 shows a side view of the embodiment according to figure 1.
Figure 3 shows another side view of the embodiment according to figure 1.
Figure 4 shows a second embodiment of a surface structure according to the invention.
Figure 5 shows a surface element of the surface structure according to figure 4.

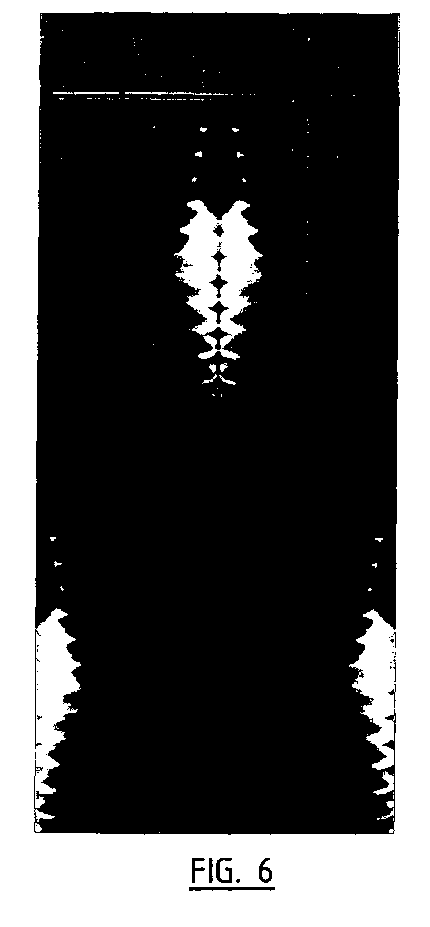

Figure 6 shows a third embodiment of the surface structure according to the invention.

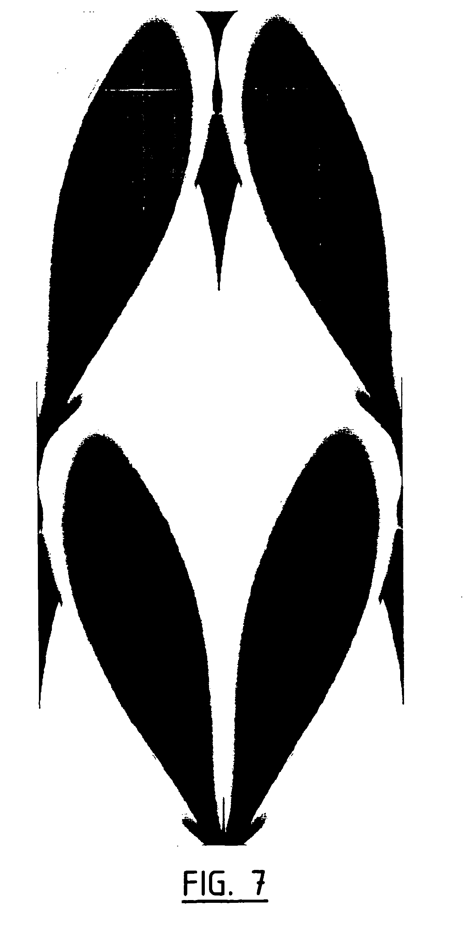

Figure 7 shows a fourth embodiment of the surface structure according to the invention.

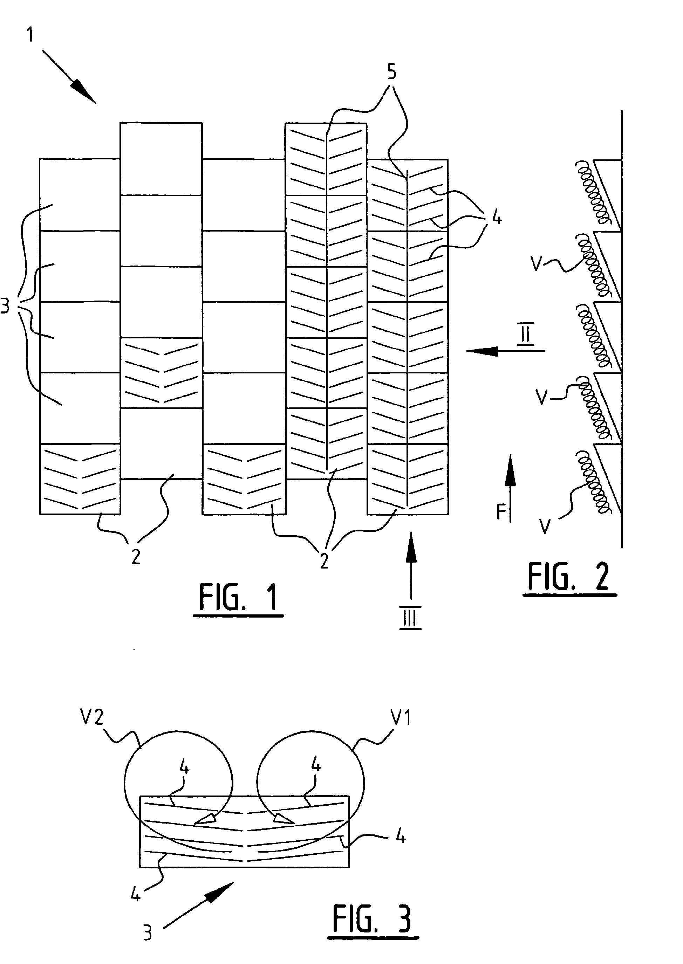

In figure 1 a first embodiment 1 of a surface structure according to the invention is shown. The surface structure 1 comprises alternating rows 2 of surface elements 3.

As shown in figure 2, the surface elements 3 are arranged in scales such that a particle flow F, e.g. air, is lifted up by each surface element 3.

The surface elements 3 are each provided with grooves 4, which extend obliquely from the longitudinal axis 5. When the particle flow F is lifted by the scaled surface elements 3, the flow F is directed by the grooves 4 and vortexes V1 and V2 are generated (see figure 3).

As is shown in figure 2, these vortexes V are cascaded and provide a boundary layer, which will reduce the drag of the particle flow F along the surface structure 1.

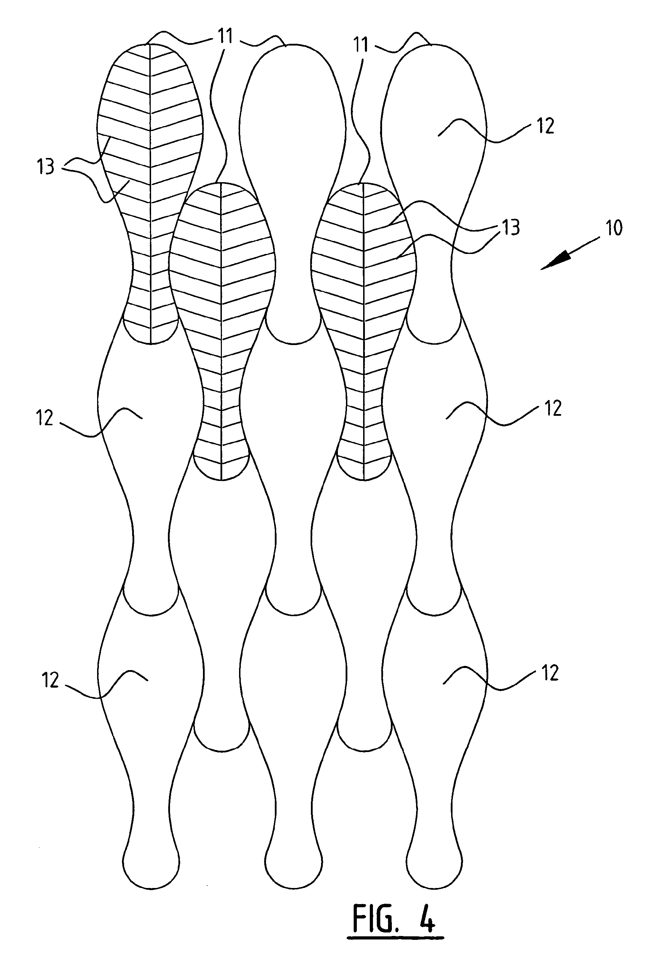

In figure 4 a second embodiment 10 of a surface structure according to the invention is shown. This surface structure 10 has also alternating rows 11 of surface elements 12. The surface elements 12 are also provided with grooves 13.

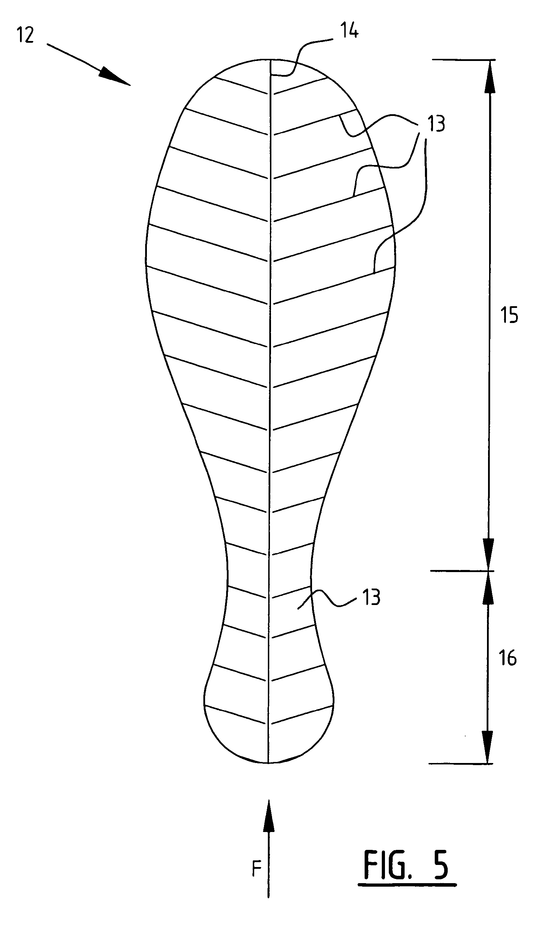

Figure 5 shows a single surface element 12 of the surface structure 10. The surface element 12 has a longitudinal axis 14, from which obliquely grooves 13 extend. The surface element 12 is inversely pin shaped, when seen in the flow direction of particle flow F. This pin shape consists out of a leaf shape 15, wherein the stalk of the leaf is shaped like a teardrop 16.

When a particle flow F flows along the surface element 12, the grooves 13 will generate two vortexes, as explained in conjunction with figures 1 - 3. These vortexes are generated at the teardrop area 16. Due to the reduction of the teardrop area 16 towards, the leaf shaped area 15, the generated vortexes are compressed and the rotation speed of these vortexes is increased. Then the vortexes are further expanded by the grooves 13 in the leaf shaped area 15. This will expand the vortexes to such a size, that the drag of the flow F along the surface structure 12 is reduced to virtually zero.

## Claims

1. Surface structure (1) comprising surface elements (3) arranged in scales forming alternating rows (2), wherein the surface elements (3) comprise grooves (4), which extend obliquely from the longitudinal axis (5) of a row in a featherlike arrangement.

2. Surface structure (1) according to claim 1, wherein the surface elements (3) in a row extend over each other like tiles.

3. Surface structure (1) according to claim 1 or 2, wherein the surface elements (3) are leaf shaped.

4. Surface structure (1) according to claim 3, wherein the stalk of the leaf shaped surface elements (3) is teardrop shaped providing a pin shape to the surface elements (3)_{.}

5. Surface structure (1) according to claim 3 or 4, wherein the curved edge of the surface elements (3) of a row interlock with the curved edge of the surface elements (3) of adjacent rows.

6. Surface comprising a surface structure (1) according to any of the preceding claims, wherein the surface is of an isolating layer arranged on top of an electrically conducting material.

## Patentansprüche

1. Oberflächenstruktur (1), die in Schuppen angeordnete Oberflächenelemente (3) aufweist, die abwechselnde Reihen (2) bilden, wobei die Oberflächenelemente Rillen (4) aufweisen, die von der Längsachse (5) einer Reihe schräg in einer federartigen Anordnung verlaufen.

2. Oberflächenstruktur (1) gemäß Anspruch 1, wobei die Oberflächenelemente (3) in einer Reihe wie Ziegel übereinander angeordnet sind.

3. Oberflächenstruktur (3) gemäß Anspruch 1 oder 2, wobei die Oberflächenelemente (3) blattförmig sind.

4. Oberflächenstruktur (1) gemäß Anspruch 3, wobei der Stiel der blattförmigen Oberflächenelemente (3) eine tränenartige Form aufweist, wodurch die Oberflächenelemente (3) eine stiftartige Form erhalten.

5. Oberflächenstruktur (1) gemäß Anspruch 3 oder 4, wobei die gebogene Kante der Oberflächenelemente (3) einer Reihe mit den gebogenen Kanten der Oberflächenelemente (3) der Nachbarreihen ineinander greift.

6. Oberfläche mit einer Oberflächenstruktur (1) gemäß einem der vorhergehenden Ansprüche, wobei die Oberfläche eine Isolierschicht ist, die auf einem elektrisch leitfähigen Material angeordnet ist.

## Revendications

1. Structure de surface (1) comprenant des éléments de surface (3) disposés en écailles formant des rangées alternées (2), dans laquelle les éléments de surface (3) comprennent des rainures (4) qui s'étendent en oblique de l'axe longitudinal (5) d'une rangée, dans un aménagement penniforme.

2. Structure de surface (1) selon la revendication 1, dans laquelle les éléments de surface (3) d'une rangée s'étendent l'un sur l'autre comme des tuiles.

3. Structure de surface (1) selon les revendications 1 ou 2, dans laquelle les éléments de surface (3) ont la forme de feuilles.

4. Structure de surface (1) selon la revendication 3, dans laquelle la queue des éléments de surface (3) en forme de feuilles est en forme de goutte, assurant une forme de quille aux éléments de surface (3).

5. Structure de surface (1) selon les revendications 3 ou 4, dans laquelle le bord arrondi des éléments de surface (3) d'une rangée s'imbrique avec le bord arrondi des éléments de surface (3) de rangées adjacentes.

6. Surface comprenant une structure de surface (1) selon l'une quelconque des revendications précédentes, dans laquelle la surface est celle d'une couche isolante aménagée par-dessus un matériau conducteur de l'électricité.
